# EUROPEAN PATENT APPLICATION

(11) **EP 2 859 944 A1**
(43) Date of publication of application: **15.04.2015**
(21) Application number: 13803774.2
(22) Date of filing: 07.06.2013
(51) Int. Cl.: B01J 35/10, B01J 35/02, B01D 53/56, F01N 3/20

(54) **EMBEDDED SCR CATALYST STRUCTURE IN WHICH CATALYST IS EMBEDDED IN PORES OF SUPPORT**

(30) Priority: 12.06.2012 KR 20120062412
(71) Applicant: Heesung Catalysts Corporation, Siheung-si Gyeonggi-do 429-848 (KR)
(72) Inventor: HAN, Hyun-sik, Ansan-si Gyeonggi-do 425-870 (KR); KIM, Eun Seok, Ansan-si Gyeonggi-do 426-743 (KR); AHN, Neung-Gyun, Siheung-si Gyeonggi-do 429-450 (KR)
(74) Representative: Regimbeau
(86) International application number: PCT/KR2013/005002
(87) International publication number: WO 2013/187632

(57) **Abstract**

In order to solve the problems of conventional extruded or coated SCR catalysts to be applied to the treatment of an exhaust gas with a high sulfur content, the present invention relates to a deposited or embedded SCR catalyst structure in which a catalyst is deposited or embedded in pores, and to a deposited SCR catalyst structure, wherein a catalytic active material is deposited into a support, and a catalytic active material does not substantially exist in the inner wall of the support.

## Description

### Technical Field

The present invention relates to an embedded SCR (Selective Catalytic Reduction) catalyst structure having a catalyst material embedded in support pores and, more particularly, to a deposited or embedded SCR catalyst structure having a catalyst material deposited or embedded in support pores, suitable for use in treatment of exhaust gas having high sulfur content, wherein a catalytically active material is deposited into the support and does not substantially exist on the inner wall of the support.

### Background Art

Typically, SCR systems for controlling discharge of nitrogen oxide have been utilized in various fields of industry, multi-purpose boilers, engines and furnaces. SCR systems are useful in decreasing the discharge of nitrogen oxide from exhaust gas of boilers, engines and furnaces. In such systems, ammonia is sprayed into the exhaust gas flow of a boiler containing a catalyst. Ammonia functions to reduce a large amount of nitrogen oxide in exhaust gas so that nitrogen oxide is converted into water and nitrogen. Since the catalyst for removing nitrogen oxide for use in SCR systems is expensive, stoichiometric control of exhaust gas/ammonia/catalyst reaction is required. Such a catalytically active material, such as a material for removing nitrogen oxide, is loaded on a support made of a fire resistant inorganic material or metal material.

Catalysts for use in SCR systems may be classified into, depending on the type of preparation process, extruded SCR catalysts and coated SCR catalysts. An extruded catalyst is configured such that an active material and a support material are prepared in slurry form and then the slurry is extruded using an extruder. As such, it is typically manufactured in a honeycomb structure to prevent a drop in exhaust gas pressure due to the catalyst. On the other hand, a coated catalyst is configured such that a honeycomb support made of a ceramic or metal material is coated with an active material. Specifically, a monolithic support having fine parallel gas flow passages extending therethrough from an inlet or an outlet of the honeycomb support may be used, and the passages are open such that a fluid passes therethrough. The passages that are substantially straight from the fluid inlet to the fluid outlet are coated with a washcoat as a catalytically active material and are defined by inner walls that enable the exhaust gas flowing through the passages to come into contact with the catalyst material. The flow passages of the monolithic support may have any suitable cross-sectional shape and size, such as a trapezoidal shape, a rectangular shape, a square shape, a sine curve shape, a hexagonal shape, an oval shape, or a circular shape, and may be provided in the form of channels having thin inner walls. Such a structure may have at least about 60 ~ 900 gas inflow ports (cells) per square inch of the cross-section thereof.

### Disclosure

### Technical Problem

Typically, extruded SCR catalysts are applied to power plants and ships. For example, a divanadium pentoxide-based extruded catalyst is formed in a honeycomb structure by extruding titanium dioxide as a fire resistant support material, divanadium pentoxide as an active material for removing nitrogen oxide, an organic binder additive for efficient extrusion, and an inorganic binder additive to better keep the shape and to enhance mechanical strength of the structure. Although catalysts employed in places where a large amount of dust is generated, such as ships or power plants, are required to have considerable mechanical strength, bunker C oil for use in marine diesel engines or thermal power plants contains 2% or more of sulfur and thus extruded SCR catalysts may be drastically decrease in mechanical strength upon exposure to sulfur for a long period of time. Furthermore, while the catalyst structure is broken, exhaust pressure applied to the SCR catalyst may increase, undesirably deteriorating fuel efficiency of marine diesel engines. On the other hand, when coated catalysts are applied, physical loss of catalytically active components, such as separation of the coated active material from the inner wall of the support, may occur.

### Technical Solution

The present invention has been devised to solve problems with conventional extruded or coated SCR catalysts for use in treatment of exhaust gas having high sulfur content, and provides a deposited or embedded SCR catalyst structure configured such that a catalyst material is deposited or embedded in pores. More specifically, the present invention pertains to a deposited SCR catalyst structure configured such that a catalytically active material is deposited into a support and does not substantially exist on the inner wall of the support.

Unlimitedly, in the deposited or embedded SCR catalyst structure according to the present invention, the support has a honeycomb structure with a porosity of 20 ~ 80%, and may include cordierite, silicon carbide, cordierite-α-alumina, silicon nitride, zircon mullite, spodumene, alumina-silica-magnesia, zircon silicate, sillimanite, magnesium silicate, zircon, petalite, α-alumina, or aluminosilicate. Preferably useful is cordierite. In the deposited SCR catalyst structure according to the present invention, the catalytically active material deposited into the support may include, but is not limited to, vanadium series comprising vanadium and titanium oxide (TiO₂), tungsten oxide (WO₃) or molybdenum oxide (MoO₃) added thereto, zeolite series, or base metal oxides.

### Advantageous Effects

According to the present invention, a deposited or embedded SCR catalyst can exhibit almost the same compressive strength as in fresh products even after exposure to exhaust gas having high sulfur content, thus overcoming mechanical defects of conventional extruded structures over time. In the deposited SCR catalyst according to the present invention, a catalytically active material is deposited into the pores of the support. Even when such a catalyst is exposed for a long period of time to exhaust gas having high sulfur content, the catalytically active material is maintained, thus preventing physical loss of the catalytically active material such as separation from the inner wall of the support as in conventional coated structures. Furthermore, a relatively large support channel space can be ensured compared to the conventional coated structure, and thereby exhaust pressure applied to the catalyst is decreased.

### Description of Drawings

FIG. 1 illustrates photographs of the results of evaluation of shape change of conventional extruded and coated SCR catalysts by sulfur component;
FIG. 2 illustrates a graph of the results of evaluation of compressive strength of conventional extruded and coated SCR catalysts by sulfur component;
FIG. 3 illustrates schematic cross-sectional views of a conventional coated SCR catalyst and a deposited SCR catalyst according to the present invention;
FIG. 4 illustrates the distribution of a catalytically active material in the deposited SCR catalyst according to the present invention; and
FIG. 5 illustrates a graph of the activities of a conventional coated SCR catalyst and a deposited SCR catalyst according to the present invention.

### Best Mode

According to the present invention, an embedded SCR catalyst structure is a deposited SCR catalyst structure configured such that a catalytically active material is deposited into a support and does not substantially exist on the inner wall of the support.

As used herein, the term "deposited" or "embedded" means that a catalytically active material may penetrate into the pores of a support and is thus loaded in the pores, and the catalytically active material is not substantially applied on the inner wall of the support.

In order to deposit the catalytically active material into the support so as to achieve the purpose of the present invention, a porosity, which is a ratio of the pore volume relative to the total support volume, may be 20 ~ 80%. If the porosity is less than 20%, a catalytic function necessary for SCR reaction cannot be sufficiently provided. In contrast, if the porosity exceeds 80%, mechanical strength may decrease. Thus, the porosity of the support is preferably set to 40 ~ 70%, and more preferably 65%. To minimize a drop in pressure while exhaust gas discharged from power plants or marine diesel engines passes through the catalyst, the support is preferably provided in the form of a honeycomb structure. When the honeycomb structure, which is apparent to those skilled in the art, is schematically described, it has parallel gas flow passages extending therethrough from an inlet or an outlet of the support. As such, the passages are opened at the inlet and the outlet and are thus provided in the form of channels that are open paths that are substantially straight from the gas inlet to the gas output, and the channels are defined by thin inner walls.

The support according to the present invention is formed of a ceramic material able to impart high porosity, including cordierite, silicon carbide, cordierite-α-alumina, silicon nitride, alumina-silica-magnesia, zircon silicate, sillimanite, magnesium silicate, zircon, petalite, α-alumina, or aluminosilicate. Preferably useful is cordierite. The catalytically active material is deposited into a plurality of pores of the support. The material deposited into the support may include, but is not limited to, vanadium series comprising vanadium and titanium oxide (TiO₂), tungsten oxide (WO₃) or molybdenum oxide (MoO₃) added thereto, zeolite series, or base metal oxides.

A method of preparing the deposited or embedded SCR catalyst according to the present invention enables the catalytically active material to be quantified so as not to exist on the inner wall of the support, such that substantially the entire catalytically active material is deposited into the support and the catalytically active material does not substantially exist on the surface of the inner wall of the support, as in conventional coated SCR catalyst preparation methods. Specifically, a conventional coated SCR catalyst is prepared by quantifying a catalytically active slurry so as to form a thick coating layer on the inner wall of the support, whereas the deposited SCR catalyst according to the present invention is obtained by quantifying a catalytically active slurry so that substantially the entire catalytically active material may penetrate into the pores of the support, immersing the porous support in the slurry and then firing it. The deposited SCR catalyst according to the present invention may be easily prepared by (a) measuring the porosity of a support, (b) determining an amount of a catalytically active slurry so as to be completely deposited into the pores of the support, (c) depositing the catalytically active slurry into the support, and (d) calcining the catalyst obtained in (c). The quantitative deposition process in (c) may be achieved by Korean Patent Application No. 10-2011-0098682 (Metered weight coater for precise PM control), filed 2011-09-29 by the present applicants, the disclosure of which is incorporated by reference in the present application.

Below is a description of the deposited catalyst according to the present invention with reference to the appended drawings. Problems with conventional extruded and coated catalysts are evaluated and the present invention is specified below.

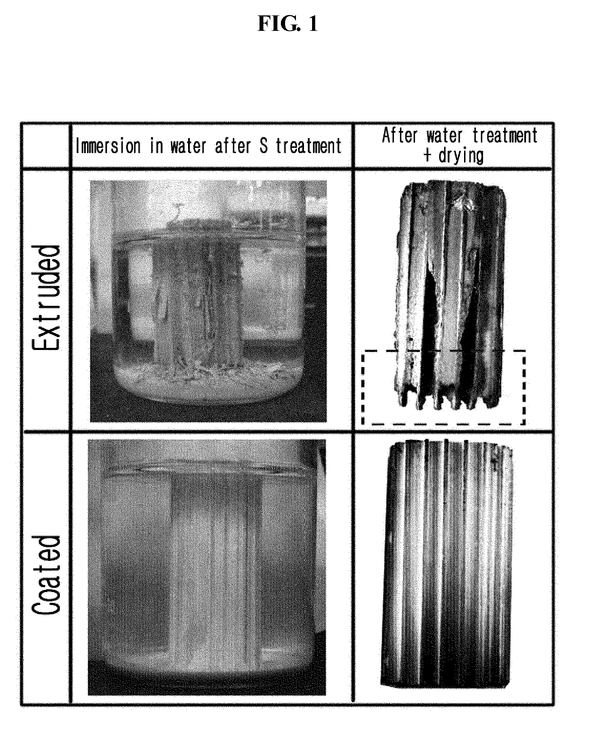

FIG. 1 illustrates the results of evaluating whether the shape of conventional extruded and coated SCR catalysts is broken by sulfur component. The extruded catalyst used for this testing is an extruded catalyst structure (diameter 1 inch, length 2 inch, 50 cpi) in honeycomb form composed of

TiO₂ and WO₃ as fire resistant support materials and V₂O₅ as an active material for removing nitrogen oxide. Also, the coated catalyst is configured such that the inner wall of the fire resistant honeycomb support (diameter 1 inch, length 2 inch, 50 cpi) made of cordierite is coated with the same catalytically active material (V₂O₅-TiO₂-WO₃). FIG. 1 illustrates the results of structural change of extruded and coated catalysts upon contact with water after having been exposed to sulfuric acid gas (24 hr). As illustrated in FIG. 1, the extruded catalyst was slowly dissolved and thus its shape was broken. On the other hand, the coated catalyst was maintained in a support structure even after exposure to sulfuric acid gas but the catalytically active material applied on the inner wall of the support was lost. Based on the evaluation results, the conventional extruded or coated catalyst is unsuitable for use in treatment of exhaust gas having high sulfur content from marine diesel engines and power plants.

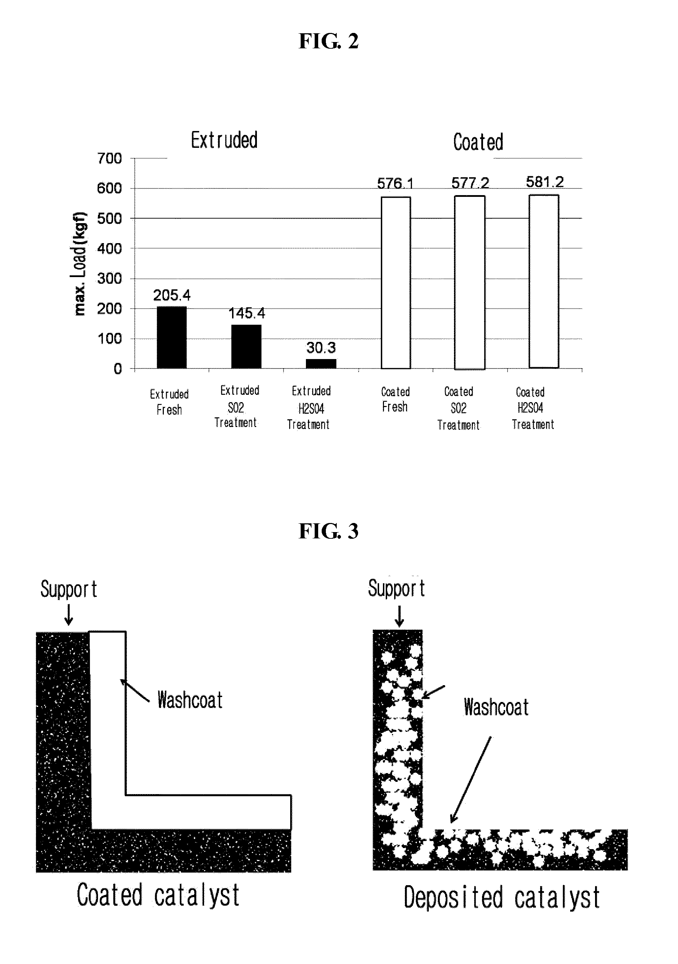

FIG. 2 illustrates a graph of the results of evaluation of compressive strength of the conventional extruded and coated SCR catalysts by sulfur component. In addition to the treatment of the extruded and coated SCR catalysts with sulfuric acid gas, compressive strength of the catalyst was measured after exposure to SO₂ gas comprising 1800 µm SO₂, 10% H₂O and the remainder of air at 300°C for 24 hr. As illustrated in FIG. 2, the fresh extruded catalyst has lower compressive strength than the fresh coated catalyst, but compressive strength thereof may be remarkably lowered even after SO₂ gas treatment or sulfuric acid gas treatment, ultimately breaking the catalyst structure. On the other hand, the coated catalyst is not changed in strength even after SO₂ gas treatment or sulfuric acid gas treatment. However, as is apparent from the results of FIG. 1, abnormal attachment problems, such as separation of the catalytically active components from the inside of the support, may occur. Hence, there is a need to improve the structure of extruded and coated catalysts.

FIG. 3 illustrates schematic cross-sectional views of the coated SCR catalyst and the deposited SCR catalyst according to the present invention. In the present invention, the support is a porous support to the extent that substantially the entire catalytically active component may be deposited therein. As illustrated in FIG. 3, the deposited catalyst is configured such that the washcoat (catalytically active component) is completely deposited into the support and does not substantially exist on the inner wall of the support. In contrast, since the conventional coated catalyst includes a support made of a typical fire resistant ceramic material, the washcoat is applied to a predetermined thickness on the inner wall of the support. Accordingly, since the catalytically active component is deposited into the pores of the support in the present invention, sticky problems with the conventional coated catalyst may be solved. Furthermore, the support channels may have a relatively large volume in which exhaust gas may flow, compared to the coated catalyst, and thus exhaust pressure may decrease, whereby fuel efficiency of engines may be expected to increase.

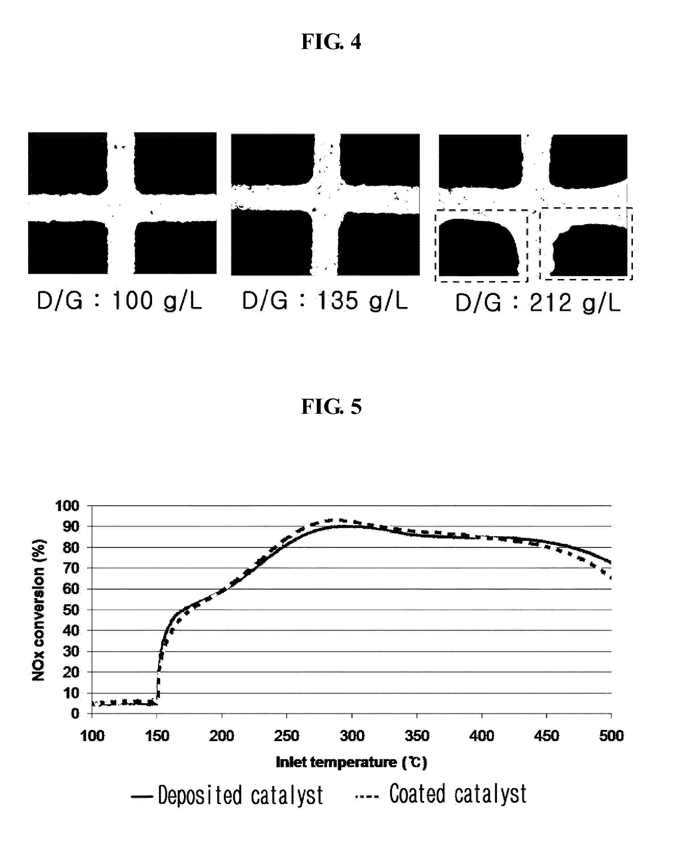

FIG. 4 illustrates the distribution of the catalytically active material in the deposited SCR catalyst according to the present invention including a support made of cordierite with a porosity of 65%. As shown from the left toward the right, the catalytically active component had a dry gain (D/G) of 100 g/L, 135 g/L and 212 g/L. When the catalytically active component having 100 g/L or 135 g/L is applied to the cordierite support with a porosity of 65%, almost all of the catalyst components substantially penetrate into the pores of the support and the catalyst components that contribute to catalytic activity do not substantially exist on the surface of the support. However, when the active component having 212 g/L is applied, the active material remaining after filling the pores therewith may be applied on the inner wall of the support, thus forming a coated catalyst-like structure. The deposited catalyst according to the present invention has a catalytically active component in an amount such that the coated catalyst-like structure is not formed, and such a catalyst component may completely penetrate into the pores and then loaded in the pores via calcination. Therefore, the method of preparing the catalyst according to the present invention may include (a) measuring the porosity of the support, (b) determining the amount of the catalytically active slurry able to be completely deposited into the pores of the support, (c) depositing the catalytically active slurry into the support, and (d) calcining the catalyst obtained in (c).

FIG. 5 illustrates a graph of the activities of the conventional coated SCR catalyst and the deposited SCR catalyst according to the present invention. The deposited catalyst is configured such that the catalytically active component having 3% V₂O₅/TiO₂ and a dry gain of 100 g/L is deposited into the support (300 cpsi) made of cordierite with a porosity of 65%. The coated catalyst is configured such that the catalytically active component having 2.5% V₂O₅/TiO₂ and a dry gain of 139.8 g/L is applied on the inner wall of the support (400 cpsi) made of cordierite with a porosity of 35%. The activity evaluation conditions of both catalysts are as follows: space velocity (SV) of 50,000 1/hr, and supply gas components comprising 500 ppm NO, 500 ppm NH₃, 10% O₂, 5% H₂O, and N₂ balance. As illustrated in FIG. 5, the deposited or embedded SCR catalyst exhibited almost the same catalytic activity as in the coated SCR catalyst.

## Claims

1. An embedded SCR (Selective Catalytic Reduction) catalyst structure having a catalyst material embedded in support pores for use in treatment of nitrogen oxide of exhaust gas having high sulfur content, comprising a support and a catalytically active material, wherein the catalytically active material is deposited into pores of the support and does not substantially exist on an inner wall of the support.

2. The embedded SCR catalyst structure of claim 1, wherein the support has a porosity of 20 ~ 80%.

3. The embedded SCR catalyst structure of claim 1, wherein the support has a honeycomb structure.

4. The embedded SCR catalyst structure of any one of claims 1 to 3, wherein the support comprises a ceramic material selected from the group consisting of cordierite, silicon carbide, cordierite-α-alumina, silicon nitride, zircon mullite, spodumene, alumina-silica-magnesia, zircon silicate, sillimanite, magnesium silicate, zircon, petalite, α-alumina, and aluminosilicate.

5. The embedded SCR catalyst structure of claim 1, wherein the catalytically active material is selected from the group consisting of vanadium series comprising vanadium and titanium oxide (TiO₂), tungsten oxide (WO₃) or molybdenum oxide (MoO₃) added thereto, zeolite series, and base metal oxides.
